**Europäisches Patentamt**

**European Patent Office**

**Office européen des brevets**

(19)

(11) Veröffentlichungsnummer : **0 047 229**
**B1**

(12) **EUROPÄISCHE PATENTSCHRIFT**

(45) Veröffentlichungstag der Patentschrift :
**26.09.84**

(21) Anmeldenummer : **81810348.3**

(22) Anmeldetag : **26.08.81**

(51) Int. Cl.³ : **B 32 B 1/10**, B 32 B 17/04,
B 32 B 5/18, C 08 J 5/24

(54) **Herstellung von gekrümmten steifen Formteilen.**

(30) Priorität : **01.09.80 CH 6573/80**

(43) Veröffentlichungstag der Anmeldung :
**10.03.82 Patentblatt 82/10**

(45) Bekanntmachung des Hinweises auf die Patenterteilung : **26.09.84 Patentblatt 84/39**

(84) Benannte Vertragsstaaten :
**DE FR GB IT NL**

(56) Entgegenhaltungen :
**DE-A- 1 709 342**
**DE-A- 2 235 028**
**DE-A- 2 235 957**
**US-A- 3 740 301**
**US-A- 3 995 984**

(73) Patentinhaber : **CIBA-GEIGY AG**
**Postfach**
**CH-4002 Basel (CH)**

(72) Erfinder : **Gruber, Urs, Dr.**
**Hangstrasse 18**
**CH-4144 Arlesheim (CH)**
Erfinder : **Patzelt, Bernd**
**Von der Tannstrasse 1**
**D-8200 Rosenheim (DE)**

## Beschreibung

Die Erfindung betrifft ein Verfahren zur Herstellung von gekrümmten steifen Formteilen mit fester, Hohlräume enthaltender Innenschicht und Deckschichten aus faserverstärktem Kunststoff durch Pressen und Erwärmen eines Werkstoffes in einer Formpresse.

Verbundwerkstoffe in Sandwichbauweise werden in der Industrie in vielfältiger Weise verwendet. Je nach ihrem Aufbau führen sie zu Produkten, die grosse mechanische Festigkeit, gutes thermisches oder elektrisches Isoliervermögen, niedrige Dichte und Materialersparnis aufweisen können. Derartige Produkte können z. B. durch beidseitiges Beschichten von harten Schäumen, wie Polyurethan, Polyvinylchlorid oder leichten Hölzern, wie Balsaholz, oder wabenförmigen Materialien aus Papier oder Faserstoffen, mit Fasergeweben hergestellt werden. Auf diese Weise kann man nur ebene oder höchstens leicht gekrümmte Sandwichbauteile erhalten.

Aus der US-A-4 028 477 ist ein Verfahren zur Herstellung von Sandwichbauteilen bekannt, die auch stärker gekrümmt sein können. Bei diesem Verfahren werden flexible offenzellige Schäume als Innenteil verwendet, wobei die Poren grösstenteils mit Harz gefüllt werden, welches nachher beim Zusammenpressen mit den Deckschichten aus Fasermaterial grösstenteils wieder herausgepresst wird. Da der Schaum bei der Pressung zusammengedrückt wird und die verbleibenden kleineren Hohlräume immer noch mit Harz gefüllt sind, entsteht ein Formteil, der eine relativ hohe Dichte aufweist, etwa von der Grössenordnung 700-1 000 kg/m$^3$.

Ein weiteres Verfahren, welches die Herstellung stark und/oder sphärisch gekrümmter Sandwichbauteile ermöglicht, ist aus der DE-A-2 740 647 bekannt. In diesem Verfahren wird eine Innenschicht in Form einer saugfähigen, eine pastöse härtbare Kunstharzmasse enthaltende Filz- oder Fliesschicht mit Aussparungen, welche ebenfalls mit Harz gefüllt sind, mit widerstandsfähigen dünnen Deckschichten, insbesondere aus glasfaserverstärktem Kunstharz, versehen, nass-in-nass verformt und gehärtet. Da die Herstellung des gehärteten Formteils in einem Arbeitsgang erfolgt, müssen zunächst die verwendeten Harzmassen gemischt und dosiert aufgetragen werden, wobei die pastöse Harzmasse sorgfältig in die Filzschicht eingedrückt werden muss. Dieses imprägnierte Material kann nicht gelagert werden. Es besitzt ebenfalls eine relativ hohe Dichte, da die Innenschicht mit Harz getränkt oder partiell gefüllt ist.

Ferner ist die einseitige Beschichtung von Schaumstoffplatten aus dem thermoplastischen Polymethacrylimid und deren Verbiegung in der Weise, dass die Beschichtung auf der konvexen Seite liegt, bekannt. Als Deckschicht werden Bleche, z. B. aus Aluminium verwendet. Die gekrümmten produkte können dann auf der gestauchten Innenseite noch kaschiert werden. Abgesehen davon, dass die Grösse der Krümmung sich nach der Art des Deckschichtmaterials richten muss, da dieses die Zugkräfte aufzunehmen hat, können die beschichteten Materialien nicht nach beiden Seiten gekrümmt werden, ohne dass störende Stauchungen der Deckschicht auftreten und der Schaumstoff aufreisst.

Schließlich ist es aus der DE-A-2 235 028 bekannt, dass man starre Verbundkörper aus einem, mehrere Schichten aufweisenden Plattenstapel, der mindestens eine Hartschaumstoffschicht und mindestens eine Aussenschicht enthält, durch Formpressen herstellen kann, wobei zur Herstellung von gekrümmten Formteilen lediglich unverbundene Plattenstapel eingesetzt werden.

Es wurde nun gefunden, dass sich ein Verbundwerkstoff mit Sandwichstruktur aus fester, Hohlräume enthaltender Innenschicht und Deckschichten aus faserverstärkten, vorgehärteten Epoxidharzen, wobei die Deckschichten direkt mit den beiden oberflächen der genannten Innenschicht verbunden sind, zu steifen, beliebige Krümmungen aufweisenden Formteilen verformen lässt.

Gegenstand vorliegender Erfindung ist somit ein Verfahren zur Herstellung von gekrümmten steifen Formteilen mit fester, Hohlräume enthaltender Innenschicht und Deckschichten aus faserverstärktem Kunststoff durch Pressen und Erwärmen eines Werkstoffes in einer Formpresse und Entfernen der so gehärteten gekrümmten Formteile, das dadurch gekennzeichnet ist, dass man einen Verbundwerkstoff, der, direkt mit den beiden Oberflächen der genannten innenschicht verbunden, je eine Deckschicht aus einer mit einer Fasermatte oder einem Faservlies verstärkten und vorgehärteten Epoxidharz/Härter-Mischung aufweist, in die erwärmte Formpresse gibt, diese zunächst nur auf Kontakt an den Erhebungen zugefahren und dann entsprechend dem Erweichen der Hohlräume enthaltenden Innenschicht und der faserverstärkten Deckschichten an den Berührungszonen ganz geschlossen wird, wobei ein Druck von 0,5 bis 1,5 N/mm$^2$ bei einer Temperatur von 100 bis 200 °C angewendet wird.

Als Innenschichten eignen sich harte thermoplastische oder duroplastische Schaumstoffe, z. B. aus Polyacrylimid oder Polymethacrylimid, Polyurethan, Hartpolyvinylchlorid oder Polyisocyanurat, oder solche auf Basis von Epoxidharzen. Sie weisen Mindestdicken von etwa 3 mm auf, damit ihre Schaumstruktur noch voll zur Geltung kommt. In der Regel sind sie 4 bis 8 mm dick, können aber je nach dem Verwendungszweck auch eine grössere Dicke aufweisen, z. B. 1 cm oder mehr. Ferner eignen sich als innenschichten insbesondere auch wabenförmige Materialien aus Papier oder Aluminium ; auch andere Faserstoffe sind verwendbar.

Als Verstärkungsmaterial in den beiden mit der Innenschicht verbundenen Deckschichten dienen Fasermatten, insbesondere Glasfasermatten. In diesen sind die einzelnen Fasern räumlich angeordnet und schwach verfilzt. Die Fasern können auch in einer Richtung bevorzugt orientiert sein. Es ist auch möglich, dass die Deckschichten anstelle von Kurzglasfasern, die in der Regel 2-10 cm lang sind, wirr abgelegte Endlosfasern enthalten. Ausser Glasfasern kommen auch Kunstfasern in Betracht, wie solche aus Polyestern, Polyamid, anorganischem Material oder Kohlenstoff. Bevorzugt verwendet man mehrere Deckschichten, die aus gleichen oder verschiedenen Faserarten bestehen, z. B. Lagen von Polyesterfaservliesen abwechselnd mit Glasseidenmatten. Das Fasermaterial wird mit epoxidharzen und Härtern sowie gegebenenfalls Beschleunigern imprägniert und vorgehärtet, so dass das Harz noch thermoplastische Eigenschaften aufweist (B-Stadium).

Geeignete Epoxidharze sind z. B. flüssige Harze auf Bisphenol A- oder F-Basis oder von polyglycidylierten aromatischen Diaminen, wie z. B. 4,4'-Bis-(N,N-diglycidylaminophenyl)-methan. Als Härter können beispielsweise Amine, wie 4,4'-Diaminodiphenyl-methan, oder $BF_3$-Aminkomplexe, wie Bortrifluorid-Monoäthylamin, oder Dicyandiamin, verwendet werden. Aber auch Säureanhydride, wie Hexahydrophthalsäureanhydrid, können eingesetzt werden. Gegebenenfalls fügt man noch Härtungsbeschleuniger zu, z. B. solche auf Basis von tertiären Aminen, wie Benzyldimethylamin, Tris-(dimethylaminomethyl)-phenol oder N-(p-Chlorphenyl)-N',N'-(dimethyl)-harnstoff.

Auf die poröse Innenschicht werden die Deckschichten auflaminiert, wobei die Imprägnierung der Fasermatten oder des Faservlieses im gleichen Arbeitsgang erfolgen kann oder bereits vorher erfolgt ist. Im letzteren Fall kann die Vorhärtung des Harzes durch Erwärmen ebenfalls vor der Laminierung durchgeführt werden. Dabei erhält man lagerfähige Prepregs. Andernfalls wird das nass-in-nass beidseitig beschichtete Gebilde zur Vorhärtung der Deckschichten erwärmt, z. B. 5-10 Min. auf 80-150 °C, je nach dem verwendeten Harz/Härter/(Beschleuniger)-System.

Die beiden Deckschichten brauchen nicht identisch zu sein. Sie können voneinander verschiedene Fasern enthalten und aus einer unterschiedlichen Zahl von mit Epoxidharz imprägnierten Faserlagen bestehen. Als oberste Schicht kann einseitig oder beidseitig zusätzlich ein harzreicher, gegebenenfalls gefärbter gelartiger Ueberzug, der mit Vlies verstärkt sein kann, oder eine metallschicht, z. B. eine Aluminiumfolie, aufgebracht werden.

Ferner ist es möglich, mehrfache Sandwichstrukturen herzustellen, indem auf eine Deckschicht eine weitere steife Schicht des porösen Materials gelegt wird, die wiederum mit einem faserverstärkten Epoxidharz beschichtet wird. Dieser Vorgang kann je nach den gewünschten Eigenschaften des Endproduktes wiederholt werden.

Nach dem Abkühlen kann der Verbundwerkstoff mit Sandwichstruktur bis zu seiner Verwendung gelagert werden. Dann wird er unter Bildung von gekrümmten Formteilen, in einer Formpresse unter Erhitzen gepresst, wobei das vorgehärtete Epoxidharz aushärtet. Dabei wird der Verbindwerkstoff in die erwärmte Formpresse gelegt. Diese wird zunächst nur auf Kontakt an den Erhebungen und anschliessend entsprechend dem Erweichen der faserverstärkten Deckschichten an den Berührungszonen langsam ganz zugefahren. Die Sandwichgebilde lassen sich bei der Härtung und Formung überraschenderweise beidseitig stark verbiegen, ohne dass es in den Stauchzonen zu störenden Wulstbildungen kommt. Es lassen sich bei relativ niedrigen Pressdrucken von 0,5-1,5 $N/mm^2$ Gebilde mit sehr kleinen Krümmungsradien herstellen, z. B. 2-10 mm bei 6 mm dicken Schaumplatten oder 2 mm bei einer 12 mm hohen Wabe als Innenschicht. Der Pressdruck wird mindestens um eine Zehnerpotenz niedriger als die beim Verarbeiten von Sheet Molding Compounds (SMC) erforderlichen Drucke. Obgleich man die für SMC brauchbaren Pressen ebenfalls für die Verarbeitung der erfindungsgemässen Sandwiches verwenden kann, kommen auch billigere und einfachere Pressen mit sehr kleiner Schliesskraft in Betracht. Die Presstemperaturen liegen im Bereich von 100-200 °C.

Die Verbundwerkstoffe können für die rationelle und schnelle Herstellung von Autokarrosserieteilen mit grosser Biegesteifigkeit verwendet werden. Auch wenn Formteile mit Kurvenradien von wenigen Millimetern hergestellt werden, treten weder Risse noch Falten in den Deckschichten und im Schaumkern auf.

## Beispiel 1

Auf einer ebenen Unterlage werden eine Lage Polyestervlies und zwei Lagen Glasseidenmatte mit einem Flächengewicht von 0,45 $kg/m^2$ mit einem niederviskosen lösungsmittelfreien Laminiersystem aus 89 Gew.-% eines Bisphenol A-Diglycidyläthers mit einem epoxidgehalt von 5,2 Val/kg, 7,5 Gew.-% Dicyandiamid und 3,5 Gew.-% Monuron imprägniert. Darauf wird eine 5 mm dicke Hartschaumplatte aus Polymethacrylimid mit der Dichte 50 $kg/m^3$ (« Rohacell » ®, registriertes Warenzeichen der Firma Röhm) gelegt. Auf diese werden in umgekehrter Reihenfolge zwei Lagen Glasseidenmatte und eine Lage Polyestervlies auflaminiert. Das ganze wird in einem Umluftofen bei 130 °C während 5 1/2 Minuten vorreagiert. Nach dem Erkalten ist das Sandwichprepreg nur noch leicht klebrig. Zur Lagerung wird das Prepreg zwischen silikonisiertes Papier gelegt. Es kann bei Raumtemperatur mehrere Monate gelagert werden.

Nach dem Entfernen des einen silikonisierten Papieres wird das Sandwichprepreg in einem Ofen während 5 Min. bei 130 °C vorgewärmt, dann mit der Unterseite nach oben in die auf 170 °C erwärmte, metallene Form gelegt. Das Oberteil der Form wird bis auf Kontakt an den Erhebungen herangefahren und schliesslich nur so schnell zugefahren als die fortschreitende Erweichung des Schaumkernes und der epoxidharzgetränkten faserverstärkten Deckschichten eine Deformation ohne Bruch erlaubt. Bei der Herstellung eines formteils mit zwei 90°-Winkeln mit 6 mm Krümmungsradius kann die Form innerhalb von 90-120 Sek. bis auf den Anschlag zugefahren werden. Der erforderliche Schliessdruck beträgt 0,6 N/mm². Nach 5 Min. ist das Teil gehärtet. Das erhaltene gehärtete Sandwich, das eine Dicke von 8 mm aufweist (je 1,5 mm entfallen auf die Deckschichten, 5 mm auf die Innenschicht), hat im Vergleich zu einer 2 mm dicken Aluminiumplatte die folgenden Eigenschaften :

| Eigenschaften | Sandwich gemäss Beispiel 1 | Aluminiumplatte |
|---|---|---|
| Flächengewicht kg/m² | 4,8 | 5,4 |
| Dichte g/cm³ | 0,6 | 2,698 |
| E-Modul Deckschicht N/mm² | 8 880 | 70 000 |
| E-Modul Innenschicht N/mm² | 90 | — |
| Biegesteifigkeit N · mm² (15 mm breiter Probekörper) | $4,3 \cdot 10^6$ | $7 \cdot 10^5$ |

Die E-Moduli werden aus dem Biegeversuch mit Drei-Punkt-Belastung nach der Norm ISO 178 ermittelt.

### Beispiel 2

Mit der in Beispiel 1 angegebenen Laminiermischung werden eine Lage Polyestervlies und 2 Lagen Glasseidenmatten auf einer ebenen Unterlage imprägniert. Das erhaltene Laminat wird in einer Presse bei 130 °C unter Kontaktdruck während 2 1/2 Minuten zu einem Prepreg vorgehärtet. Es hat leicht klebrige Eigenschaften und kann bei Raumtemperatur während mehrerer Monate gelagert werden.

Man legt nach dem Entfernen des Silikonpapiers die erhaltenen Prepregs auf die Ober- und Unterseite eines 5 mm starken Schaums aus Polymethacrylimid (« Rohacell 51 »®) und geht dann weiter vor wie in Beispiel 1 beschrieben. Die Eigenschaften der erhaltenen Sandwichplatten sind identisch mit denjenigen, die das nach dem Nass-in-Nass-Verfahren hergestellten Formteil gemäss Beispiel 1 aufweist.

Die Biegesteifigkeit ist das Produkt aus dem Elastizitätsmodul E und dem Trägheitsmoment I des Probekörpers und ist die Summe der Biegesteifigkeiten der einzelnen Schichten, die nach der Formel

$$(E_1.b_1.h_1^3/12) + E_1.b_1.h_1.a_1^2$$

berechnet werden. Darin bedeuten $E_1$ den Elastizitätsmodul, $b_1$ die Breite, $h_1$ die Höhe der ersten Schicht und $a_1$ der Abstand der Mitte der ersten Schicht zur neutralen Mittelebene des Probekörpers.

### Beispiel 3

Es wird ein unsymmetrischer Aufbau der Sandwichstruktur hergestellt, indem man für die eine Deckschicht zwei Lagen Polyestervlies und drei Lagen Glasseidenmatte und für die andere Deckschicht je eine Lage Polyestervlies und Glasseidenmatte verwendet. Im übrigen geht man gleich vor wie in Beispiel 1 beschrieben. Das gehärtete Formteil zeigt folgende Eigenschaften :

Dicke : 8,3 mm,
Flächengewicht : 5,2 kg/m²,
Biegesteifigkeit : $3,5 \cdot 10^6$ N · mm².

### Beispiel 4

Es wird ein Epoxidintegralschaum in einer 6 mm weiten Giessplattenform aus aluminium hergestellt, indem man 100 Gew. Teile eines flüssigen Epoxidharzes auf Bisphenol A-Basis, 50 Gew. Teile eines Aminhärters auf Polyaminoamidbasis und 4 Gew. Teile eines Treibmittels auf Polysiloxanbasis (« Silicon DC 1107 »® der Dow Corning) zusammenmischt, die Temperatur auf 60 °C erhöht und während 20 Minuten beibehält. Es entsteht ein Schaum mit einem Raumgewicht von 100 g/Liter. Nach leichtem Aufrauhen der Oberflächen der erhaltenen Schaumplatte werden auf diese Glasseidenmatten (« Vetrotex M 212-40-450 »® der Saint Gobain Pont-à-Mousson) und Polyestervliese auflaminiert, wobei die Matten und vliese mit dem im Beispiel 1 beschriebenen Epoxidharz/Härter/Beschleuniger-System, dem ausserdem noch 10 Gewichtsprozent Kreidemehl, bezogen auf die Harz/Härter/Beschleuniger-Menge, zugefügt sind, imprägniert sind. Auf die eine Seite der Schaumplatte werden 3 Lagen Glasseidenmatte und 2 Lagen Polyestervlies, auf die andere Seite je eine solche Lage aufgebracht. Das noch « nasse » Sandwich wird während 5 Minuten im Umluftofen bei 125 °C vorgehärtet.

Das erkaltete Sandwich ist trocken und lagerfähig. Es wird in eine Pressform, welche auf 130 °C aufgeheizt ist, gelegt. Die Form wird innerhalb 3 Minuten geschlossen. Nach weiteren 10 Minuten bei

0 047 229

130 °C wird entformt. Das Formstück weist 2 rechte Winkel mit 6 und 11 mm Krümmungsradius auf. Die Gesamtdicke beträgt 8 mm, die Dicke der 1. Deckschicht 2 mm, der Schaumplatte 5 mm und der 2. Deckschicht 1 mm.

Beispiel 5

Ein 4 mm dicker Hart-Polyurethanschaum (« Hartmoltopren »® der Firma Bayer) mit dem Raumgewicht von 40 g/Liter wird wie in Beispiel 1 beschrieben beidseitig beschichtet und vorgehärtet. Das erhaltene Sandwich-Prepreg wird in der 130 °C heissen Presse zu einem Gegenstand mit zwei rechten Winkeln von 6 und 11 mm Krümmungsradius geformt. Gesamtdicke : 7 mm, Schaumdicke : 4 mm.

Keine Rissbildung beim Schaum, keine Wulstbildung auf den Stauchseiten.

Ersetzt man vergleichsweise die Glasfasermatten durch Glasseidengewebe (Typ 91745 der Firma Interglas), so erhält man einen geformten Gegenstand, dessen Schauminnenschicht zwar auch keine Risse aufweist, aber auf der Stauchseite ein leichtes Verwerfen des Gewebes zeigt.

Beispiel 6

Ein 4 mm dicker Polyisocyanuratschaum (« Isovit-PIR »® der Isovit AG) mit dem Raumgewicht von 38 g/Liter wird wie in Beispiel 5 beschrieben, beschichtet und geformt. Die Ergebnisse sowohl bei den mit Glasfasermatten als bei den mit Glasseidengeweben beschichteten Sandwiches sind dieselben wie in Beispiel 5 beschrieben.

Beispiel 7

Als Innenschicht wird Polyamidpapier aus m-Phenylendiamid und Isophthalsäure (« Nomex »® der Firma Du Pont) in Wabenform (« Aeroweb »®-Waben der Ciba-Geigy Ltd., Duxford) für ein Sandwich verwendet ; Wabendurchmesser : 6 mm, Wabenhöhe : 6 mm, Papierstärke : $7,62 \cdot 10^{-2}$ mm, Raumgewicht : 40 kg/m³.

Das eine Decklaminat enthält 3 Lagen Glasseidenmatte und 2 Lagen Polyestervlies, das andere je eine solche Lage. Sie werden mit einer Mischung aus

a) 100  Gew.Teilen eines Gemisches von 50 Gew.Teilen 4,4'-Bis-(N,N-diglycicylaminophenyl)-methan mit einem epoxidgehalt von 8,0 Val/kg und 50 Gew.Teilen eines flüssigen Epoxidharzes auf Bisphenol A-Basis mit einem Epoxidgehalt von 5,3 Val/kg,

b) 29  Gew. Teilen 4,4'-Diaminodiphenylmethan und

c) 0,23 Gew. Teilen Bortrifluorid-Monoäthylamin

imprägniert. Die ausgehärtete Mischung weist eine Glasumwandlungstemperatur von mindestens 180 °C auf.

Die beiden Decklaminate werden während 4 Stunden bei Raumtemperatur gelassen. Darauf wird das Sandwich zusammengebaut und während 1/2 Stunde einer Temperatur von 80 °C ausgesetzt. Das Harz wird in den B-Zustand übergeführt und ist bei Raumtemperatur kaum mehr klebrig. Das Sandwich ist in diesem Zustand mehrere Wochen lagerfähig.

Das Sandwich wird während 6 Minuten bei 120 °C vorgewärmt und dann in eine 150 °C warme Form gelegt, welche innerhalb 30 Sekunden auf Anschlag zugefahren wird. Nach 10 Minuten wird entformt und das Formteil noch bis auf 180 °C nachgehärtet. Man erhält ein Formteil ohne Rissbildung oder andere Beschädigungen. An der Innenseite der Stauchung (rechter Winkel mit 2 mm Krümmungsradius) ist kein Wulst sichtbar.

Beispiel 8

Herstellung einer rechteckigen Schale.

Analog Beispiel 7 wird mit denselben Materialien ein Prepreg-Sandwich mit folgenden Schichten aufgebaut :

1 Vlies + 1 Matte + 1Vlies + 6 mm dicke « Nomex »®-Wabe + 1 Vlies + 1 Matte + 1 Vlies.

Das kurz vorgewärmte Prepreg-Sandwich wird über eine auf 100 °C erwärmte Pressform für eine rechteckige Schale gelegt. Die ebenfalls 100 °C warme Gegenform wird bis zum Kontakt mit dem Sandwich herangefahren, dann innerhalb von 30 Sekunden auf Anschlag zugefahren. Dabei wird das Prepreg-Sandwich in die Schalenform hineingepresst, wobei keine Falten oder Knicke entstehen. Die Temperatur der Presse wird auf 150 °C erhöht. Nach 1 Stunde wird die rechteckige (17 × 17 cm) Schale entnommen. Die Wände werden auf eine Höhe von 3 cm abgeschnitten. Die rechtwinkligen Kanten und Ecken mit 6 mm Innenradius sind einwandfrei ausgebildet. Im Durchlicht ist zu erkennen, dass auch an den Ecken die 6-eckigen Wabenstrukturen aussen weder überdehnt noch zerrissen sind, während sie auf der Innenseite gleichmässig gestaucht sind.

### Ansprüche

1. Verfahren zur Herstellung von gekrümmten steifen Formteilen mit fester, Hohlräume enthaltender Innenschicht und Deckschichten aus faserverstärktem Kunststoff durch Pressen und Erwärmen eines Werkstoffes in einer Formpresse und Entfernen der so gehärteten gekrümmten Formteile, dadurch gekennzeichnet, dass man einen Verbundwerkstoff, der, direkt mit den beiden Oberflächen der genannten Innenschicht verbunden, je eine Deckschicht aus einer mit einer Fasermatte oder einem Faservlies verstärkten und vorgehärteten Epoxidharz/Härter-Mischung aufweist, in die erwärmte Formpresse gibt, diese zunächst nur auf Kontakt an den Erhebungen zugefahren und dann entsprechend dem Erweichen der Hohlräume enthaltenden Innenschicht und der faserverstärkten Deckschichten an den Berührungszonen ganz geschlossen wird, wobei ein Druck von 0,5 bis 1,5 N/mm$^2$ bei einer Temperatur von 100 bis 200 °C angewendet wird.

2. Verfahren gemäss Anspruch 1, dadurch gekennzeichnet, dass man einen Verbundwerkstoff mit einem festen Schaumstoff als Innenschicht verwendet.

3. Verfahren gemäss Anspruch 2, dadurch gekennzeichnet, dass der Schaumstoff aus Polyacrylimid oder Polymethacrylimid besteht.

4. Verfahren gemäss Anspruch 2, dadurch gekennzeichnet, dass der Schaumstoff auf Basis von Epoxidharzen gebildet ist.

5. Verfahren gemäss Anspruch 2, dadurch gekennzeichnet, dass der Schaumstoff aus Polyurethan besteht.

6. Verfahren gemäss Anspruch 1, dadurch gekennzeichnet, dass man als Innenschicht ein wabenförmiges Material aus Papier oder Aluminium verwendet.

7. Verfahren gemäss Anspruch 1, dadurch gekennzeichnet, dass man Deckschichten mit glasfaserverstärkten Epoxidharz/Härter-Gemischen verwendet.

8. Verfahren gemäss Anspruch 1, dadurch gekennzeichnet, dass man Deckschichten, die mit Polyesterfasern verstärktes Epoxidharz/Härter-Gemisch enthalten, verwendet.

9. Verfahren gemäss Anspruch 1, dadurch gekennzeichnet, dass man einen Verbundwerkstoff mit mehrfacher Sandwichstruktur verwendet.

### Claims

1. Process for producing curved rigid moulded parts having a solid inner layer containing hollow spaces and covering layers formed from fibre-reinforced plastics material by moulding and heating of a material in a moulding press and removal of the cured curved moulded parts, characterised in that a composite material, which is bonded directly to the two surfaces of the stated inner layer and which has on each side a covering layer formed from a precured epoxide resin/curing agent mixture reinforced with a fibre mat and/or a fibre fleece, is placed into a heated moulding press, this being firstly closed just until contact is made with the projecting parts of the material and subsequently, as the inner layer containing hollow spaces and the fibre-reinforced layers soften over the zones of contact, fully closed, a pressure of 0.5 to 1.5 N/mm$^2$ at a temperature of 100 to 200 °C being applied.

2. Process according to claim 1, characterised in that a composite material having a solid foam plastics material as the inner layer is used.

3. Process according to claim 2, characterised in that the foam plastics material consists of polyacrylimide or polymethacrylimide.

4. Process according to claim 2, characterised in that the foam plastics material is based on epoxide resins.

5. Process according to claim 2, characterised in that the foam plastics material consists of polyurethane.

6. Process according to claim 1, characterised in that a honeycomb material of paper or aluminium is used as the inner layer.

7. Process according to claim 1, characterised in that covering layers containing glass-reinforced epoxide resin/curing agent mixtures are used.

8. Process according to claim 1, characterised in that covering layers containing an epoxide resin/curing agent mixture reinforced with polyester fibres are used.

9. Process according to claim 1, characterised in that a composite material having a multiple sandwich structure is used.

### Revendications

1. Procédé de fabrication de pièces moulées cintrées rigides comportant une couche interne solide, contenant des vides, et des couches de recouvrement en matière plastique renforcée de fibres, par pressage et chauffage d'un matériau dans une presse de moulage et enlèvement des pièces moulées cintrées ainsi durcies, procédé caractérisé en ce qu'on introduit dans la presse de moulage chauffée un matériau composite qui présente, sur chacune des deux faces de ladite couche interne et directement liée à celle-ci, une couche de recouvrement en un mélange résine époxyde/durcisseur renforcé d'un mat de fibres ou d'un voile de fibres et pré-durci, on n'amène d'abord la presse qu'au contact des points saillants, puis on la ferme complètement aux zones de contact au fur et à mesure du ramollissement de la couche intérieure contenant des vides et des couches de recouvrement renforcées de fibres, en opérant sous une pression de 0,5 à 1,5 N/mm$^2$ et à une température de 100 à 200 °C.

2. Procédé suivant la revendication 1, caractérisé en ce qu'on utilise un matériau composite avec une mousse solide comme couche intérieure.

3. Procédé suivant la revendication 2, caractérisé en ce que la mousse se compose de polyacrylimide ou de polyméthacrylimide.

4. Procédé suivant la revendication 2, caractérisé en ce que la mousse est à base de résines époxydes.

5. Procédé suivant la revendication 2, caractérisé en ce que la mousse se compose de polyuréthanne.

6. Procédé suivant la revendication 1, caractérisé en ce qu'on utilise comme couche interne un matériau en nids d'abeilles en papier ou en aluminium.

7. Procédé suivant la revendication 1, caractérisé en ce qu'on utilise des couches de recouvrement qui contiennent un mélange résine époxyde/durcisseur renforcé de fibres de verre.

8. Procédé suivant la revendication 1, caractérisé en ce qu'on utilise un mélange résine époxyde/durcisseur renforcé avec des fibres de polyester.

9. Procédé suivant la revendication 1, caractérisé en ce qu'on utilise un matériau composite avec une structure sandwich multiple.